# EUROPEAN PATENT SPECIFICATION

(11) **EP 3 516 864 B1**
(45) Date of publication and mention of the grant of the patent: **30.12.2020**
(21) Application number: 17788293.3
(22) Date of filing: 19.09.2017
(51) Int. Cl.: H04N 7/18, B60R 1/00

(54) **CABIN FOR INDUSTRIAL VEHICLE COMPRISING VISION SENSORS**
KABINE FÜR INDUSTRIELLES FAHRZEUG MIT SICHTSENSOREN
CABINE POUR VÉHICULE INDUSTRIEL COMPRENANT DES CAPTEURS DE VISION

(30) Priority: 19.09.2016 IT 201600093818
(43) Date of publication of application: 31.07.2019
(73) Proprietor: Iveco S.p.A., 10156 Torino (IT)
(72) Inventor: ARMIGLIATO, Marco, 10153 Torino (IT); VERGANO, Raffaele, 10020 Cambiano (IT); VARRASSO, Maddalena, 10139 Torino (IT)
(74) Representative: Bongiovanni, Simone
(86) International application number: PCT/IB2017/055676
(87) International publication number: WO 2018/051321

(56) References cited:
- EP-A1- 1 157 890
- EP-A1- 2 377 725
- EP-A2- 1 065 642
- GB-A- 2 383 315
- US-A1- 2005 040 939

## Description

### TECHNICAL FIELD

The present invention relates to a cabin for industrial vehicle comprising vision sensors.

### BACKGROUND ART

Cabins for industrial vehicles comprising vision sensors (normally TV cameras) carried by the cabin to film the space surrounding the industrial vehicle are already known. The video signal produced by the TV cameras being supplied to a monitor, housed in the cabin and showing the video signal produced by the TV cameras. The data shown by the monitor facilitate and improve driving the vehicle, especially during manoeuvres such as the reverse.

For example, the Italian patent application MI2014A001114 describes a rear-view system for driving a vehicle in which three TV cameras arranged behind the vehicle include a left side TV camera, a central TV camera and a right rear TV camera. A longitudinally shaped display shows three horizontally adjacent projection areas corresponding to respective cameras shootings.

US2005/0040939 A1 discloses a vehicle cabin according to the preamble of claim 1 and describes a plurality of TV cameras carried by a vehicle cabin and designed to film the space surrounding the vehicle and a monitor, housed in the cabin and electronically communicating with the TV cameras to show the video signals produced by the TV cameras.

### DISCLOSURE OF INVENTION

The object of the present invention is to provide a cabin comprising a vision system, which as fully as possible shows the space surrounding the vehicle.

This object is achieved by the present invention as it relates to a cabin for industrial vehicle comprising a pair of side walls provided with doors, a base wall, an upper wall, a rear wall and a front wall housing a windscreen delimited by a lower edge and by an upper edge near the upper wall, a plurality of TV cameras carried by the cabin and filming the space surrounding the industrial vehicle and a monitor, housed in the cabin and electronically communicating with the TV cameras to show the video signal produced by the TV cameras, characterized in that the monitor has an elongated shape whose longer sides extend parallel to the upper edge of the windscreen near the upper wall; said monitor comprising a plurality of adjacent display units including: a central display unit; a first and a second side display units, arranged on opposite sides of the central display unit; a first and a second end display units, respectively arranged at the sides of the first and second side display units at the opposite ends of said monitor; said TV cameras comprising: a first front TV camera oriented with respect to said cabin so as to film a first portion of space arranged in front of a central portion of said front wall; the video signal of said first front TV camera being sent to the central display unit; a second front TV camera oriented with respect to said cabin so as to film a second portion of space arranged in front of a first side of said front wall; the video signal of said second front TV camera being supplied to the first side display unit; a third front TV camera oriented with respect to said cabin so as to film a third portion of space arranged in front of a second side of said front wall; the video signal of said third front TV camera being supplied to the second side display unit; a first rear TV camera oriented with respect to said cabin so as to film a fourth portion of space arranged behind the second side of said front wall; the video signal of said first rear TV camera being supplied to the first end display unit; and a second rear TV camera oriented with respect to said cabin so as to film a fifth portion of space arranged behind the second side of said front wall; the video signal of said second rear TV camera being supplied to the second end display unit.

### BRIEF DESCRIPTION OF THE DRAWINGS

The invention will now be illustrated with reference to the accompanying drawings, which schematically represent an example of the present invention, wherein:
- Figure 1 schematically shows a cabin comprising vision sensors according to the present invention; and
Figure 2 is a perspective view of the inside of the cabin.

### BEST MODE FOR CARRYING OUT THE INVENTION

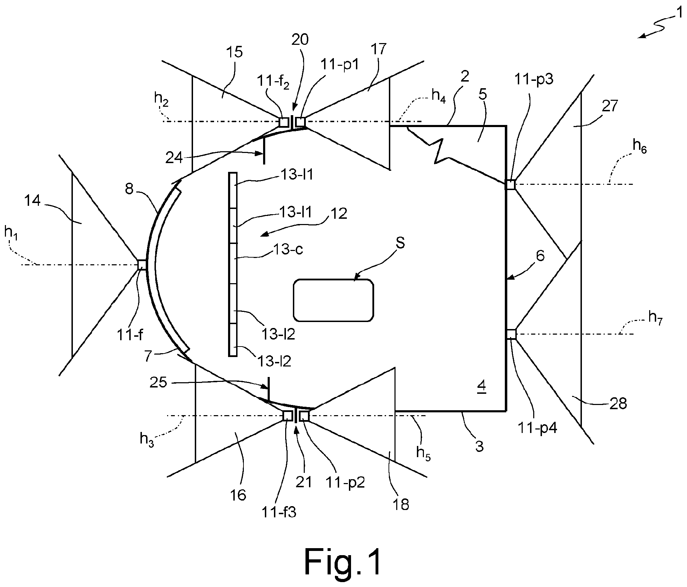

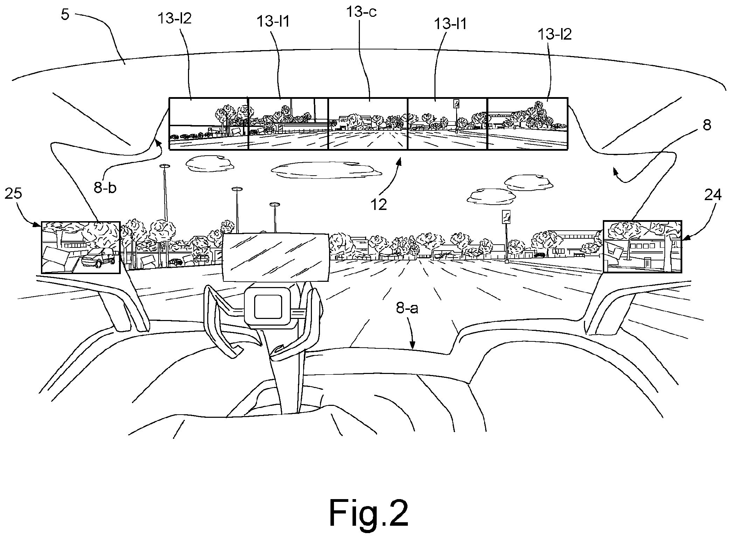

Figure 1 indicates with the reference number 1 as a whole a cabin for industrial vehicle comprising a pair of side walls 2,3 provided with doors (not shown), a base wall 4, an upper wall 5, a rear wall 6 and a front wall 7 housing a windscreen 8 delimited by a lower edge 8-a (Figure 2) and by an upper edge 8-b near the upper wall 5, a plurality of TV cameras 11 carried by the cabin 1 and filming the space surrounding the industrial vehicle and a first monitor 12 housed in the cabin 1 and electronically communicating with the TV cameras 11 to show the video signal produced by the TV cameras 11.

The monitor 12 has an elongated rectangular shape with longer straight sides extending parallel to the upper edge 8-b of the windscreen 8 (Figure 2) near the upper wall 5. The monitor 12 is connected to the upper wall 5 by means of support brackets of a known type that are not shown for simplicity's sake. Conveniently, the monitor 12 is a LED flat monitor.

The monitor 12 comprises five adjacent rectangular display units 13 comprising:
- a central display unit 13-c;
- a first and a second side display units 13-11, 13-12 arranged on opposite sides of the central display unit 13-c;
- a first and a second end display unit 13-e1, 13-e2, respectively arranged at the sides of the first and second side displays 13-11, 13-12 at opposite ends of the first monitor 12.

The TV cameras 11 are preferably digital and include:
- a first front TV camera 11-f1 oriented with respect to the cabin 1 so as to film a first portion of space 14 arranged in front of a central portion of the front wall 7; the video signal of said first front TV camera 11-f being supplied to the central display 13-c;
- a second front TV camera 11-f2 oriented with respect to the cabin 1 so as to film a second portion of space 15 arranged in front of a first side of the front wall 7; the video signal of the second front TV camera 11-f2 being supplied to the first side display unit 13-11;
   or a third front TV camera 11-f3 oriented with respect to the cabin 1 so as to film a third portion of space 16 arranged in front of a second side of the front wall 7; the video signal of the third front TV camera 11-f3 being supplied to the second side display unit 13-12;
- a first rear TV camera 11-p1 oriented with respect to the cabin 1 so as to film a fourth portion of space 17 arranged behind the second side of the front wall 7; the video signal of the first rear TV camera 11-p1 being supplied to the first end display unit 13-e1;
   or a second rear TV camera 11-p2 oriented with respect to the cabin 1 so as to film a fifth portion of space 18 arranged behind the second side of the front wall 7; the video signal of the second rear TV camera 11-p2 being supplied to the second end display unit 13-e2.

In this way, while driving the vehicle, the industrial vehicle's driver sitting in the cabin 1 (the driver's seat is indicated by S in Figure 1) can see in a single display unit (monitor 12) the portion of space in front of the vehicle taken from three different positions (TV cameras 11-f1, 11-f2, 11-f3 with spaced axes) and the portion of space behind the vehicle taken from two different positions (TV cameras 11-p1 and 11-p with spaced axes). Therefore, the driver has a complete view of the space around the vehicle; this information facilitates and improves driving the vehicle, especially during manoeuvres.

In the example shown, the axes h1, h2, h3 of the TV cameras 11-f1, 11-f2, 11-f3 are parallel to each other and evenly distributed along a horizontal plane and the axes h4, h5 of the TV cameras 11-p1, 11-p2 are parallel to each other and evenly distributed along a horizontal plane.

Alternatively, the use of digital TV cameras allows varying the mutual spacing of the axes and the angle of inclination of the axes with respect to the horizontal based on the layout of the vehicle, of the trailer, the cabin configuration, etc.

The second front TV camera 11-f2 and the first rear TV camera 11-p1 are carried by the support 20 of a front outer rear-view mirror, which extends towards the outside of the cabin 1 from a first side wall (wall 2).

The third front TV camera 11-f3 and the second rear TV camera 11-p2 are carried by a support 21 of a second outer rear-view mirror, which extends towards the outside of the cabin from a second side wall (wall 3).

According to a further feature of the invention, it is provided a second monitor 24 and a third monitor 25, which extend in the cabin, one towards the other, from first and second sides (walls 2 and 3) of the cabin 1 near the lower edge 8-a of the windscreen 8. The TV cameras 11 further comprise a third rear TV camera 11p-3 carried by the rear wall 6 of the cabin 1 so as to film a sixth space portion 27 arranged behind the rear wall 6 and a fourth rear TV camera 11p-4 carried by the wall 6 so as to film a seventh portion 28 of the space arranged behind the rear wall 6.

In the shown example, the axes h6, h7 of the TV cameras 11-p3, 11-p4 are parallel to each other and evenly distributed along a horizontal plane.

Alternatively, the use of digital TV cameras allows varying the mutual spacing of the axes and the angle of inclination of the axes with respect to the horizontal based on the layout of the vehicle, of the trailer, the cabin configuration, etc. In particular, the angle between the axle and the vehicle can be modified to include longer or shorter trailers.

In this way, while driving the vehicle, the industrial vehicle's driver sitting in the cabin 1 can see in a pair of monitors arranged on opposite sides in the cabin the portion of space behind the vehicle taken from two different positions (TV cameras 11-p3 and 11-p4 with spaced axes). Therefore, the driver has a complete view of the space behind the vehicle; this information facilitates and improves driving the vehicle, especially during manoeuvres.

## Claims

1. A cabin for industrial vehicle comprising a pair of side walls (2,3) provided with doors, a base wall (4), an upper wall (5), a rear wall (6) and a front wall (7) housing a windscreen (8) delimited by a lower edge (8-a) and by an upper edge (8-b) near the upper wall (5), a plurality of TV cameras (11) carried by the cabin to film the space surrounding the industrial vehicle and a monitor (12), housed in the cabin and electronically communicating with the TV cameras (11) to show the video signal produced by the TV cameras (11), said TV cameras (11) comprising (11):
a first front TV camera (11-f) oriented with respect to said cabin so as to film a first portion of space (14) arranged in front of a central portion of said front wall;
a first rear TV camera (11-p1) oriented with respect to said cabin so as to film a fourth portion of space (17) arranged behind the second side of said front wall;
a second rear TV camera (11-p2) oriented with respect to said cabin so as to film a fifth portion of space (18) arranged behind the second side of said front wall;
**characterized in that** the monitor (12) has an elongated shape whose longer sides extend parallel to the upper edge (8-b) of the windscreen near the upper wall;
said monitor (12) comprising a plurality of adjacent display units comprising:
a central display unit (13-c);
a first and a second side display unit (13-11, 13-12) arranged on opposite sides of the central display unit (13-c) ;
a first and a second end display unit (13-e1, 13-e2) respectively arranged beside the first and the second side display units at opposite ends of said monitor (12);
a second front TV camera (11-f2) oriented with respect to said cabin so as to film a second portion of space (15) arranged in front of a first side of said front wall;
a third front TV camera (11-f3) oriented with respect to said cabin so as to film a third portion of space (16) arranged in front of a second side of said front wall;
wherein:
• the video signal of said first front TV camera (11-f) is supplied to the central display unit (13-c),
• the video signal of said first rear TV camera (11-p1) is supplied to the first end display unit (13-e1),
• the video signal of said second rear TV camera (11-p2) is supplied to the second end display unit (13-e2),
• the video signal of said second front TV camera (11-f2) being supplied to the first side display unit (13-11);and
• the video signal of said third front TV camera (11-f3) being supplied to the second side display unit (13-12).

2. A cabin according to claim 1, wherein the second front TV camera (11-f2) and the first rear TV camera (11-p1) are carried by the support (20) of a first outer rear-view mirror which extends towards the outside of the cabin (1) from a first side wall (2).

3. A cabin according to claim 1 or 2, wherein the third front TV camera (11-f3) and the second rear TV camera (11-p2) are carried by the support (21) of a second outer rear-view mirror which extends towards the outside of the cabin from a second side wall (3).

4. A cabin according to any one of the preceding claims, wherein a second and a third monitor (24, 25) are provided, which extend inside the cabin one towards the other from first and second sides of said cabin near a lower edge (8-a) of said windscreen; said TV cameras further comprising a third rear TV camera (11-p3) carried by said cabin so as to film a sixth portion of space (27) arranged behind the rear wall, and a fourth rear TV camera (11-p4) carried by said cabin so as to film a seventh portion of space (28) arranged behind the rear wall.

5. A cabin according to any one of the preceding claims, wherein said display units have same shape and same size, for example a rectangular shape.

## Patentansprüche

1. Kabine für ein industrielles Fahrzeug, umfassend ein Paar von Seitenwänden (2,3), die mit Türen versehen sind, eine Basiswand (4), eine obere Wand (5), eine Rückwand (6) und eine vordere Wand (7), welche eine Windschutzscheibe (8) aufnimmt, die durch eine untere Kante (8-a) und durch eine obere Kante (8-b) nahe der oberen Wand (5) begrenzt ist, eine Mehrzahl von TV-Kameras (11), die von der Kabine getragen werden, um den Raum zu filmen, der das industrielle Fahrzeug umgibt, und einen Monitor (12), der in der Kabine untergebracht ist und elektronisch mit den TV-Kameras (11) kommuniziert, um das Videosignal darzustellen, das von den TV-Kameras (11) erzeugt wird, welche TV-Kameras (11) umfassen:
eine erste vordere TV-Kamera (11-f), die bezüglich der Kabine derart ausgerichtet ist, dass sie einen ersten Raumbereich (14) filmt, der vor einem zentralen Bereich der vorderen Wand angeordnet ist;
eine erste hintere TV-Kamera (11-pl), die bezüglich der Kabine derart ausgerichtet ist, dass sie einen vierten Raumbereich (17) filmt, der hinter der zweiten Seite der vorderen Wand angeordnet ist;
eine zweite hintere TV-Kamera (11-p2), die bezüglich der Kabine derart ausgerichtet ist, dass sie einen fünften Raumbereich (18) filmt, der hinter der zweiten Seite der vorderen Wand angeordnet ist;
**dadurch gekennzeichnet, dass** der Monitor (12) eine längliche Form aufweist, dessen längere Seiten sich parallel zu der oberen Kante (8-b) der Windschutzscheibe nahe der oberen Wand erstrecken;
wobei der Monitor (12) eine Mehrzahl benachbarter Anzeigeeinheiten aufweist, umfassend:
eine zentrale Anzeigeeinheit (13-c);
eine erste und eine zweite seitliche Anzeigeeinheit (13-11,13-12), die zu gegenüberliegenden Seiten der zentralen Anzeigeeinheit (13-c) angeordnet sind;
eine erste und eine zweite Endanzeigeeinheit (13-e1,13-e2), die jeweils neben den ersten und den zweiten seitlichen Anzeigeeinheiten an gegenüberliegenden Enden des Monitors (12) angeordnet sind;
wobei eine zweite vordere TV-Kamera (11-f2) bezüglich der Kabine derart ausgerichtet ist, dass sie einen zweiten Raumbereich (15) filmt, der vor einer ersten Seite der vorderen Wand angeordnet ist;
und eine dritte vordere TV-Kamera (11-f3) bezüglich der Kabine derart ausgerichtet ist, dass sie einen dritten Raumbereich (16) filmt, der vor einer zweiten Seite der vorderen Wand angeordnet ist;
wobei:
- das Videosignal der ersten vorderen TV-Kamera (11-f) der zentralen Anzeigeeinheit (13-c) zugeführt wird,
- das Videosignal der ersten hinteren TV-Kamera (11-p1) der ersten Endanzeigeeinheit (13-e1) zugeführt wird,
- das Videosignal der zweiten hinteren TV-Kamera (11-p2) der zweiten Endanzeigeeinheit (13-e2) zugeführt wird,
- das Videosignal der zweiten vorderen TV-Kamera (11-f2) der ersten seitlichen Anzeigeeinheit (13-11) zugeführt wird, und
- das Videosignal der dritten vorderen TV-Kamera (11-f3) der zweiten seitlichen Anzeigeeinheit (13-12) zugeführt wird.

2. Kabine gemäß Anspruch 1, bei welcher die zweite vordere TV-Kamera (11-f2) und die erste hintere TV-Kamera (11-p1) von dem Halter (20) eines ersten äußeren Rückspiegels getragen werden, der sich zum Außenbereich der Kabine (1) von einer ersten Seitenwand (2) erstreckt.

3. Kabine gemäß Anspruch 1 oder 2, bei welcher die dritte vordere TV-Kamera (11-f3) und die zweite hintere TV-Kamera (11-p2) von dem Halter (21) eines zweiten äußeren Rückspiegels getragen werden, der sich zum Außenbereich der Kabine von einer zweiten Seitenwand (3) erstreckt.

4. Kabine gemäß einem der vorhergehenden Ansprüche, bei welcher ein zweiter und ein dritter Monitor (24,25) vorgesehen sind, welche sich innerhalb der Kabine zueinander von ersten und zweiten Seiten der Kabine nahe einer unteren Kante (8-a) der Windschutzscheibe erstrecken, welche TV-Kameras ferner eine dritte hintere TV-Kamera (11-p3) umfassen, die von der Kabine getragen wird, um einen sechsten Raumbereich (27) zu filmen, der hinter der Rückwand angeordnet ist, und eine vierte hintere TV-Kamera (11-p4), die von der Kabine getragen wird, um einen siebten Raumbereich (28) zu filmen, der hinter der Rückwand angeordnet ist.

5. Kabine gemäß einem der vorhergehenden Ansprüche, bei welcher die Anzeigeeinheiten die gleiche Form und die gleiche Größe aufweisen, beispielsweise eine rechteckige Form.

## Revendications

1. Cabine pour véhicule industriel comprenant une paire de parois latérales (2, 3) pourvues de portes, une paroi de base (4), une paroi supérieure (5), une paroi arrière (6) et une paroi avant (7) logeant un pare-brise (8) délimité par un bord inférieur (8-a) et par un bord supérieur (8-b) proche de la paroi supérieure (5), une pluralité de caméras de télévision (11) portées par la cabine pour filmer l'espace entourant le véhicule industriel et un écran (12), logé dans la cabine et communiquant de manière électronique avec les caméras de télévision (11) pour montrer le signal vidéo produit par les caméras de télévision (11), lesdites caméras de télévision (11) comprenant :
une première caméra de télévision avant (11-f) orientée par rapport à ladite cabine de manière à filmer une première partie d'espace (14) agencée devant une partie centrale de ladite paroi avant ;
une première caméra de télévision arrière (11-p1) orientée par rapport à ladite cabine de manière à filmer une quatrième partie d'espace (17) agencée derrière le deuxième côté de ladite paroi avant ;
une deuxième caméra de télévision arrière (11-p2) orientée par rapport à ladite cabine de manière à filmer une cinquième partie d'espace (18) agencée derrière le deuxième côté de ladite paroi avant ;
**caractérisée en ce que** l'écran (12) présente une forme allongée dont les côtés longs s'étendent parallèlement au bord supérieur (8-b) du pare-brise à proximité de la paroi supérieure ;
ledit écran (12) comprenant une pluralité d'unités d'affichage adjacentes comprenant :
une unité d'affichage centrale (13-c) ;
une première et une deuxième unité d'affichage latérale (13-11, 13-12) agencées sur des côtés opposés de l'unité d'affichage centrale (13-c) ;
une première et une deuxième unité d'affichage d'extrémité (13-e1, 13-e2) agencées respectivement à côté de la première et de la deuxième unité d'affichage latérale, aux extrémités opposées dudit écran (12) ;
une deuxième caméra de télévision avant (11-f2) orientée par rapport à ladite cabine de manière à filmer une deuxième partie d'espace (15) agencée devant un premier côté de ladite paroi avant ;
une troisième caméra de télévision avant (11-f3) orientée par rapport à ladite cabine de manière à filmer une troisième partie d'espace (16) agencée devant un deuxième côté de ladite paroi avant ;
dans laquelle :
• le signal vidéo de ladite première caméra de télévision avant (11-f) est fourni à l'unité d'affichage centrale (13-c),
• le signal vidéo de ladite première caméra de télévision arrière (11-p1) est fourni à la première unité d'affichage d'extrémité (13-e1),
• le signal vidéo de ladite deuxième caméra de télévision arrière (11-p2) est fourni à la deuxième unité d'affichage d'extrémité (13-e2),
• le signal vidéo de ladite deuxième caméra de télévision avant (11-f2) étant fourni à la première unité d'affichage latérale (13-11) ; et
• le signal vidéo de ladite troisième caméra de télévision avant (11-f3) étant fourni à la deuxième unité d'affichage latérale (13-12).

2. Cabine selon la revendication 1, dans laquelle la deuxième caméra de télévision avant (11-f2) et la première caméra de télévision arrière (11-p1) sont portées par le support (20) d'un premier rétroviseur extérieur qui s'étend en direction de l'extérieur de la cabine (1) à partir d'une première paroi latérale (2).

3. Cabine selon la revendication 1 ou 2, dans laquelle la troisième caméra de télévision avant (11-f3) et la deuxième caméra de télévision arrière (11-p2) sont portées par le support (21) d'un deuxième rétroviseur extérieur qui s'étend en direction de l'extérieur de la cabine à partir d'une deuxième paroi latérale (3).

4. Cabine selon l'une quelconque des revendications précédentes, dans laquelle un deuxième et un troisième écran (24, 25) sont prévus, qui s'étendent à l'intérieur de la cabine l'un en direction de l'autre à partir des premier et deuxième côtés de ladite cabine à proximité d'un bord inférieur (8-a) dudit pare-brise ; lesdites caméras de télévision comprenant en outre une troisième caméra de télévision arrière (11-p3) portée par ladite cabine de manière à filmer une sixième partie d'espace (27) agencée derrière la paroi arrière, et une quatrième caméra de télévision arrière (11-p4) portée par ladite cabine de manière à filmer une septième partie d'espace (28) agencée derrière la paroi arrière.

5. Cabine selon l'une quelconque des revendications précédentes, dans laquelle lesdites unités d'affichage présentent une même forme et une même taille, par exemple une forme rectangulaire.
